Europäisches Patentamt

European Patent Office

Office européen des brevets

(11) Veröffentlichungsnummer: **0 382 132 B1**

(12) **EUROPÄISCHE PATENTSCHRIFT**

(45) Veröffentlichungstag der Patentschrift: **21.06.95**

(51) Int. Cl.⁶: **F16H 47/04**

(21) Anmeldenummer: **90102183.2**

(22) Anmeldetag: **03.02.90**

(54) **Stufenlos wirkendes hydrostatisch-mechanisches Lastschaltgetriebe mit Schalt-Zahnkupplungen.**

(30) Priorität: **10.02.89 DE 3903877**

(43) Veröffentlichungstag der Anmeldung:
**16.08.90 Patentblatt 90/33**

(45) Bekanntmachung des Hinweises auf die
Patenterteilung:
**21.06.95 Patentblatt 95/25**

(84) Benannte Vertragsstaaten:
**FR GB IT NL SE**

(56) Entgegenhaltungen:
EP-A- 0 081 696     EP-A- 0 234 136
EP-A- 0 272 461     DE-A- 3 815 780
FR-A- 2 373 000     US-A- 3 580 107

(73) Patentinhaber: **Jarchow, Friedrich, Prof.
Dr.-Ing.
Am Ruhrstein 37
D-45133 Essen (DE)**

(72) Erfinder: **Jarchow, Friedrich, Prof. Dr.-Ing.
Am Ruhrstein 37
D-4300 Essen 1 (DE)**
Erfinder: **Haensel, Dietrich, Dr.-Ing.
Hustadtring 79
D-4630 Bochum 1 (DE)**
Erfinder: **Döttger, Peter, Dipl.-Ing.
Gahlenstrasse 3
D-4690 Herne 2 (DE)**
Erfinder: **Blumenthal, Ulrich, Dipl.-Ing.
Baas-Brathe-Weg 1
D-4350 Recklinghausen (DE)**
Erfinder: **Lüning, Ulrich, Dipl.-Ing.
Kleestrasse 3
D-4300 Essen 11 (DE)**
Erfinder: **Bouché, Bernhard, Dipl.-Ing.
Kemnader Strasse 245
D-4630 Bochum 1 (DE)**

(74) Vertreter: **Herrmann-Trentepohl, Werner,
Dipl.-Ing. et al
Schaeferstrasse 18
D-44623 Herne (DE)**

## Beschreibung

Stufenlos wirkende hydrostatisch-mechanische Lastschaltgetriebe der im Oberbegriff des Patentanspruches 1 angegebenen Art eignen sich vorteilhaft für Kraftfahrzeuge, da sie sich in weiten Bereichen stufenlos verstellen lassen und außerdem gute Wirkungsgrade haben. Der relativ große Stellbereich erlaubt den Betrieb der Brennkraftmaschine auf Vorzugskennlinien. Solche Kennlinien können z. B. die Kurve für minimalen Kraftstoffverbrauch, eine Linie für ein gutes Beschleunigungsverhalten oder eine Linie konstanter Drehzahl sein.

Bei einem Gangwechsel kehrt sich die Leistungsflußrichtung im hydrostatischen Getriebe um. Die Verdrängermaschinen vertauschen dabei ihre Funktionen als Pumpe und Motor. Arbeitet die verstellbare Verdrängermaschine in dem alten Gang als Pumpe, dann muß zur Deckung der Leckölströme und zur Erreichung synchroner Drehzahlen in der zu schaltenden Kupplung des neuen Ganges ihr Verdrängungsvolumen V auf einen größeren Wert eingestellt werden als den des theoretischen Verdrängungsvolumens $V_{theoretisch}$, der für leckölfreien Betrieb vorliegen würde. Wenn diese Verdrängermaschine aber im alten Gang als Motor läuft, hat sie im neuen Gang, wo sie dann als Pumpe wirkt, ein zu kleines Verdrängungsvolumen V.

Bei einem zu vollziehenden Gangwechsel wird zunächst der neue Gang bei synchronen Drehzahlen lastfrei eingelegt. Durch entsprechendes Verändern des Verdrängungsvolumens V erhält der neue Gang Last. Der Hochdruck im hydrostatischen Getriebe geht auf den Speisedruck zurück. Jetzt stützt das hydrostatische Getriebe nicht mehr ab. Der alte und der neue Gang übertragen anteilig das Drehmoment auf die Abtriebswelle. Durch weiteres Verändern des Verdrängungsvolumens übernimmt das hydrostatische Getriebe wieder Last, wobei sich die Funktionen von Pumpe und Motor vertauschen. Führt man die Volumenveränderung richtig durch, so erhält der neue Gang das gesamte Drehmoment und der alte läßt sich nahezu lastfrei trennen. Die Leckölströme und damit die notwendigen Volumenkorrekturen hängen aber von den Größen Druck, Drehzahl, Temperatur, Ölviskosität, Schwenkwinkel, Fertigungstoleranzen und Verschleiß ab. Bei jedem Schaltvorgang liegen in der Regel andere Leckölströme vor. Man muß deshalb eine relativ hohe Ausrückkraft bereitstellen, um in jedem Fall den alten Gang trennen zu können. Dies bedeutet aber ein plötzliches Verlagern der Last vom alten auf den neuen Gang. Auf diese Weise entstehen unangenehme Schaltstöße.

Die Offenlegungsschrift DE-A-38 15 780 beschreibt unter Anspruch 9 eine Maßnahme, die die Schaltstöße möglichst beseitigen soll. Dazu erhält die verstellbare Verdrängermaschine vor Auslegen des alten Ganges eine Volumenkorrektur nach der Beziehung

$$V_{neu} = 2 \, V_{theoretisch} - V_{alt}$$

Auf diese Weise versucht man, die bei jedem Gangwechsel gerade vorliegenden Leckölströme richtig zu berücksichtigen.

Während des Umschaltvorganges selbst können sich nun aber Druck und Drehzahl und damit auch die Leckölströme noch ändern. Außerdem besteht die Möglichkeit, daß beim Umschalten das Fahrzeug von Zug- in Schubbetrieb geht, wodurch die Verdrängermaschinen ebenfalls ihre Funktionen als Pumpe und Motor vertauschen. In diesen Fällen führt vorstehende Beziehung nicht zum Ziel. Bei schnellen Umschaltvorgängen, z. B. bei einem "kick down" kann bei der vorgesehenen Schaltkraft die Zeit nicht ausreichen, um die Schalt-Zahnkupplung lastfrei zu trennen. Sie kommt dann auf der Rückflanke zum Tragen, wodurch eine Verspannung entsteht. In diesem Zustand wird dann der alte Gang herausgerissen, wodurch auch Stöße entstehen.

Die EP-A-0272461 beschreibt ein Lastschaltgetriebe mit stufenlosen hydrostatischen Gängen. Das Getriebe besteht aus einem dreiwelligen Planetengetriebe, einem dazu parallel angeordneten stufenlos einstellbaren hydrostatischen Getriebe und einer Nachschaltstufe, die für kleine Abtriebsdrehzahlen über Zahnräder mit dem Sonnenrad und für große Abtriebsdrehzahlen über Zahnräder mit dem Hohlrad in Verbindung stehen. Die Schaltungen erfolgen mit Zahnkupplungen, die Synchroneinrichtungen aufweisen. Hydraulikzylinder besorgen das Einschalten und Ineingriffhalten der Zahnkupplungen. Der Gangwechsel erfolgt bei synchronen Drehzahlen. Die Zahnkupplung des neuen Ganges wird zusätzlich zugeschaltet, durch Verstellen einer Verdrängermaschine der alte Gang drehmomentfrei gemacht, die hydraulische Schaltkraft des alten Ganges unterbrochen, so daß eine Federkraft die Zahnkupplung des alten Ganges trennen kann. Auch bei dieser Lösung sind die Nachteile vorhanden, die vorstehend beschrieben wurden. Es kann passieren, daß bei Drehmomentumkehr während des Schaltvorganges die Federkraft nicht ausreicht, um den alten Gang zu trennen.

Zur Beschreibung des Standes der Technik im Hinblick auf die hier vorliegende Erfindung sind noch die Patentschriften US-A-3 302 475 und GB-A-2 166 206 von Belang.

Schaltkupplungen mit Zähnen, die auf der Vorderflanke gerade und auf der Rückflanke schräg sind, werden z. B. nach US-A-3 302 475 als Überholkupplung genutzt. Die Kupplungshälften gehören einmal zu einer Stufe für einen langsamen und zum anderen für einen schnellen Gruppengang. Wird letzterer, der bei aktiven langsamen Gruppengang leer dreht, hydraulich über eine Schaltreibungskupplung mit der Antriebswelle verbunden, entfällt in der Überholkupplung, deren zugehörige Räder auf einer zur Antriebswelle parallelen Welle sitzen, die hydraulich aufgebrachte Schaltkraft, so daß durch Abweisen der schrägen Flanken eine Trennung der Kupplung erfolgt. Jetzt dreht der langsame Gruppengang leer, während der schnelle die Leistung überträgt. Die Schaltung erfolgt ohne Zugkraftunterbrechung. Das Getriebe läßt sich aber nicht stufenlos verstellen. Ein Wechsel der den beschriebenen Gruppengängen nachgeordneten Gänge erfordert ferner eine Zugkraftunterbrechung.

Sperrsynchronisiereinrichtungen für Schaltzahnkupplungen sind z. B. aus GB-A-2 166 206 A bekannt.

Die Erfindung stellt sich nun die Aufgabe, bei den im Oberbegriff des Patentanspruches 1 angegebenen Getrieben, die vorstehend genannten Mängel zu beseitigen und ein stoßfreies Umverlagern des Drehmomentes von dem alten auf den neuen Gang zu erreichen.

Der Anspruch 1 beschreibt die erfindungsgemäße Lösung, wobei von den vier Merkmalsgruppen die erste aus US-A-3302475 bekannt ist.

Die Ansprüche 2 und 3 beinhalten eine weitere Ausgestaltung der Erfindung.

Die aus DE-A-38 15 780 bekannte Lehre nach Anspruch 2, sorgt für das Erreichen von synchronen Drehzahlen beim Einlegen eines neuen Ganges.

Der Anspruch 3 behandelt eine Schalt-Zahnkupplung mit einer aus GB-A-2166 206 A bekannten Synchronsperre. Seine Realisierung bewirkt eine Reduzierung des Verschleißes der für die Sperre notwendigen Reibpaarung.

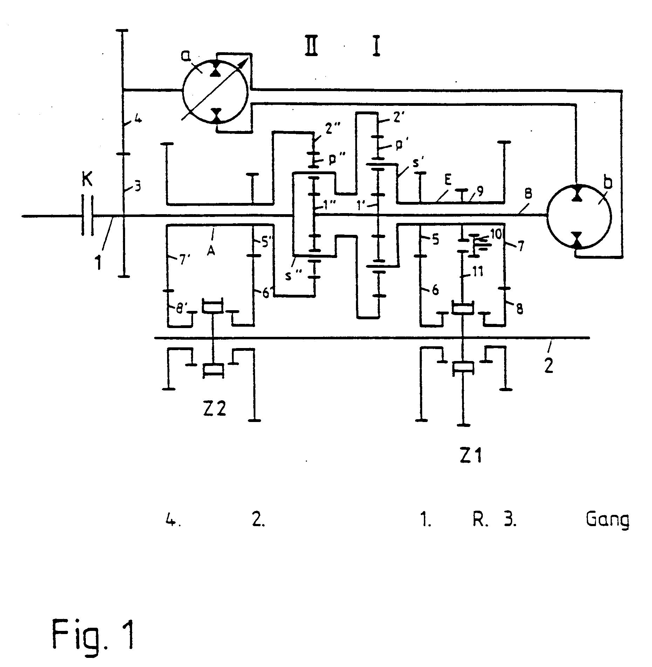

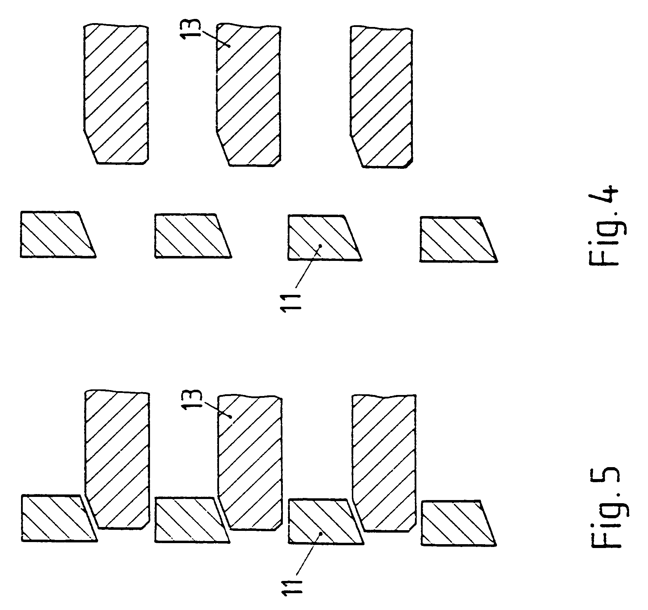

Die Fig. 1 bis 11 erläutern die erfindungsgemäßen Gedanken an Hand von Beispielen.

Fig. 1 zeigt das Konzept eines Getriebes nach der Patentschrift DE-C-31 47 447. Das vierwellige Planetengetriebe besteht aus der Planetenstufe I mit dem Sonnenrad 1', Hohlrad 2' und Planetenradträger s' mit den Planetenrädern p' und der Planetenstufe II mit dem Sonnenrad 1'', Hohlrad 2'' und Planetenradträger s'' mit den Planetenrädern p''. Es bilden die Glieder s'' und 2' die Antriebswelle 1, die Glieder 1' und 1'' die Welle B für den Anschluß der volumenkonstanten Verdrängermaschine b, Glied s' die langsamlaufende Koppelwelle E und Glied 2'' die schnellaufende Koppelwelle A. Die volumenverstellbare Verdrängermaschine a steht über die Zahnräder 3;4 mit der Antriebswelle 1 in Verbindung. Die Koppelwellen verhalten sich so, daß sie bei einem Drehzahlverhältnis der Verdrängermaschinen $n_b/n_a = -1$ gleiche Drehzahlen aufweisen und daß sie beim Verstellen des hydrostatischen Getriebes in Richtung $n_b/n_a = 1$ ihre Drehzahlen so ändern, daß die Koppelwelle A stetig schneller und die Koppelwelle E stetig langsamer wird. Die Doppel-Schalt-Zahnkupplung Z1 kann den 1. Gang mit den Rädern 5;6 oder den 3. Gang mit den Rädern 7;8 und die Doppel-Schalt-Zahnkupplung Z2 den 2. Gang mit den Rädern 5';6' oder den 4. Gang mit den Rädern 7';8' mit der Abtriebswelle 2 verbinden. Mit Rad 9, Schieberad 10 und Rad 11 läßt sich der Rückwärtsgang realisieren. Das Anfahren erfolgt mit einer Reibungskupplung K.

Die Koppelwellen E; A führen abwechselnd die Leistung vom Anzum Abtrieb. Es gehören der 1. und 3. Gang zur Koppelwelle E und der 2. und 4. Gang zur Koppelwelle A.

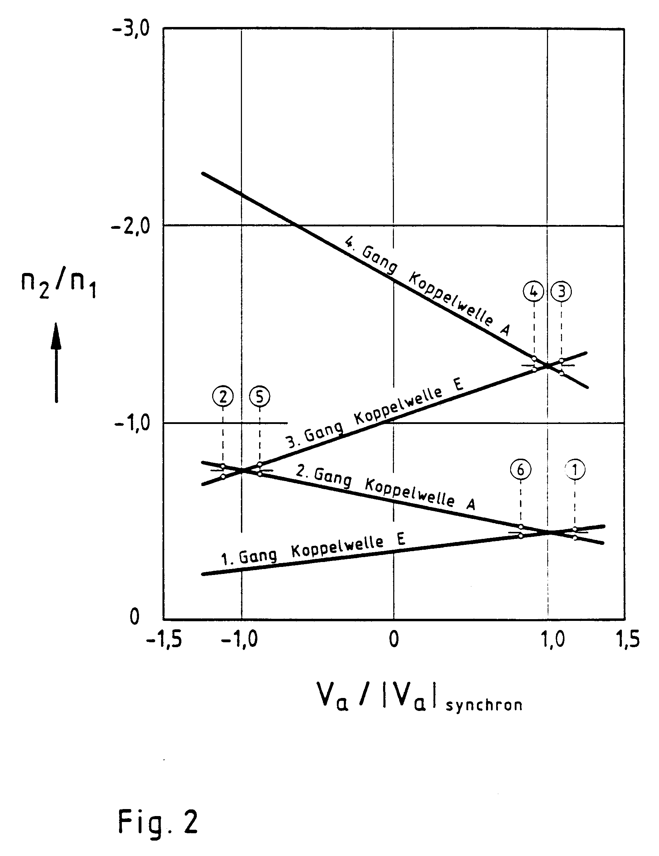

Fig. 2 zeigt den auf die Antriebswelle bezogenen Verlauf der Drehzahl der Abtriebswelle $n_2/n_1$ abhängig vom bezogenen Verdrängungsvolumen der verstellbaren Verdrängermaschine a $V_a/|V_a|_{synchron}$. $|V_a|_{synchron}$ bedeutet den Betrag $V_a$, bei dem die zu schaltenden Kupplungsteile des neuen Ganges synchrone Drehzahlen haben. Das Diagramm markiert außerdem die leistungsführenden Gänge bzw. Koppelwellen.

Der Gangwechsel beginnt jeweils bei synchronen Drehzahlen der zu schließenden Zahnkupplung. Sind die Schalt-Zahnkupplungen vom alten und neuen Gang geschlossen, erzeugt das hydrostatische Getriebe durch eine entsprechende Verstellung im Sinne der Erfindung die Verspannung. Die alte leistungsführende Koppelwelle muß dazu etwas schneller als die neue leistungsführende Koppelwelle drehen. Nach Aufzehren der Verzahnungsspiele laufen die Teile der Schalt-Zahnkupplungen wieder mit synchronen Drehzahlen. Die Ziffern in Fig. 2 geben die dazu notwendigen Positionen des hydrostatischen Getriebes an. Beim Heraufschalten liegen die bezogenen Verspannvolumina $V_a/|V_a|_{synchron}$ an den Stellen 1;2 und 3, hingegen beim Herunterschalten an den Positionen 4;5 und 6.

Durch das kontrollierte Verspannen tragen in den Schalt-Zahnkupplungen der alten Gänge jeweils die geraden und in den Schalt-Zahnkupplungen der neuen Gänge die schrägen Flanken. Dieser Zustand ist unabhängig davon, ob das Fahrzeug Zug- oder Schiebebetrieb hat.

Bei einer geschlossenen Zahnkupplung muß eine Schaltkraft das Entkuppeln verhindern. Nach erfolgter Verspannung entfällt sie für den alten Gang. Durch Verstellen des hydrostatischen Getriebes über das Verhältnis $V_a/|V_a|_{synchron}$ hinaus, so daß die alte leistungsführende Koppelwelle langsamer als die neue leistungsführende Koppelwelle wird, läßt sich ein kontrolliertes Aufheben der Verspannung und Umverlagern des Drehmomentes erzielen. Schaltstöße sind nunmehr ausgeschlossen.

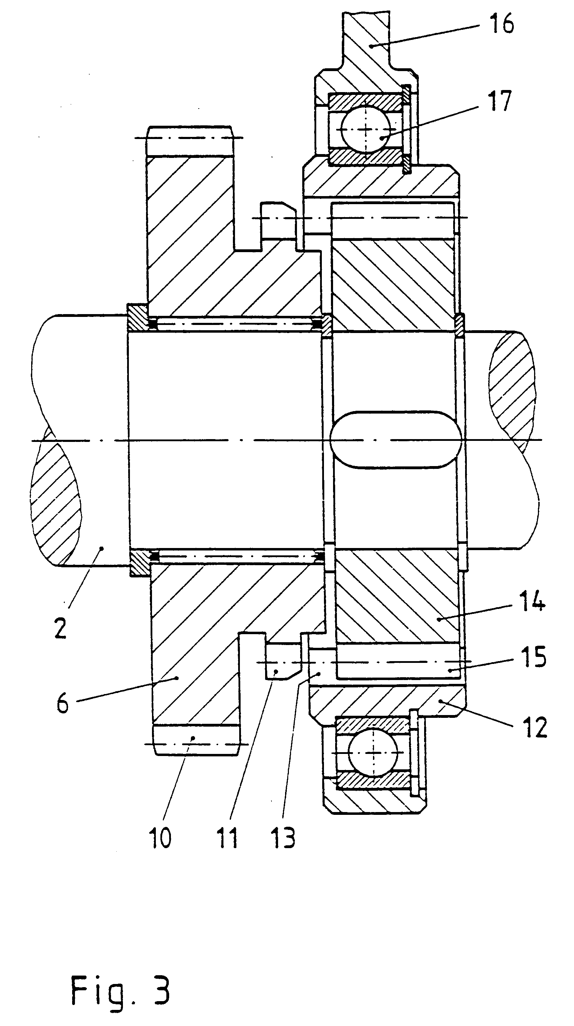

Fig. 3 zeigt ein auf der Abtriebswelle 2 gelagertes Losrad 6 mit einer Laufverzahnung 10 und einer Kupplungsverzahnung 11, die mit einem Ring 12 mit Innenverzahnung 13 in Eingriff kommen kann. Eine mit der Abtriebswelle 2 verbundene Scheibe 14 mit Außenverzahnung 15 übernimmt die Führung des Ringes 12. Die Schaltkraft wird über die Schaltgabel 16 und das Wälzlager 17 eingeleitet.

Für die Schalt-Zahnkupplung nach Fig. 3 stellen Fig. 4 die abgewickelten Verzahnungen 11 und 13 außer und Fig. 5 im Eingriff dar.

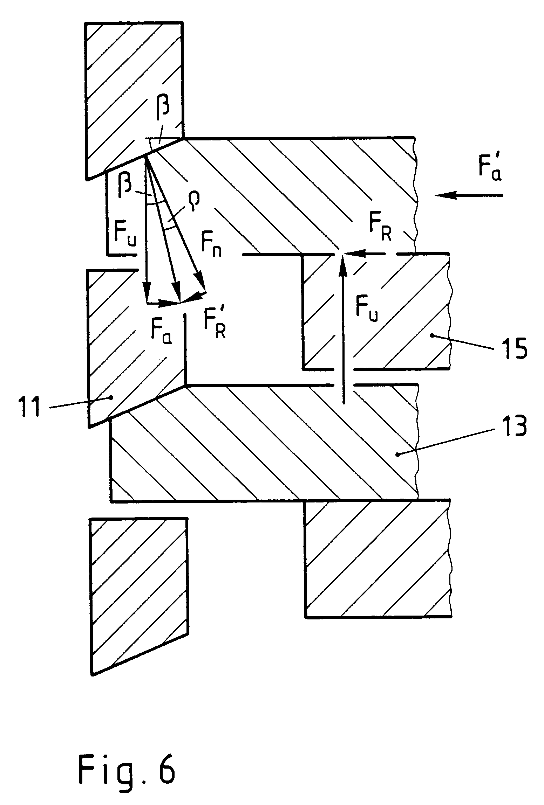

Fig. 6 zeigt die auf die Verzahnung 13 einwirkenden Kräfte F, wenn die schräge Rückflanke zum Tragen kommt. Es bedeuten $F_n$ Normalkraft, $F_a$ Axialkraft, $F_u$ Umfangskraft, $F_R$ Reibkraft und $\beta$ Schrägungswinkel der Flanke. Mit dem Reibwinkel $\rho$ bzw. der Reibungszahl $\mu$ folgt aus dem Kräftegleichgewicht mit der Haltekraft $F'_a = 0$ beim Trennen

$$F_a = F_u \tan (\beta - \rho) \geqq F_u \tan \rho = F_u \, \mu$$

die Bestimmungsgleichung für den Schrägungswinkel

$$\beta \geqq 2 \, \rho$$

Das Kräftegleichgewicht

$$F'_a \geqq F_a - F_R = F_u \tan (\beta - \rho) - F_u \tan \rho$$

liefert die auf die Umfangskraft bezogene notwendige Haltekraft

$$\frac{F'_a}{F_u} \geq \tan \, (\beta \, - \, \rho) \, - \, \tan \, \rho$$

Erfahrungsgemäß schwankt die Reibungszahl $\mu$ zwischen 0,1 und 0,2. Für ein sicheres Trennen hat man daher $\mu = 0,2$ und für ein sicheres Halten $\mu = 0,1$ zu Grunde zu legen.

Somit folgt

$$\beta \geqq 22,6°$$

und

$$\frac{F'_a}{F_u} \geq 0,2$$

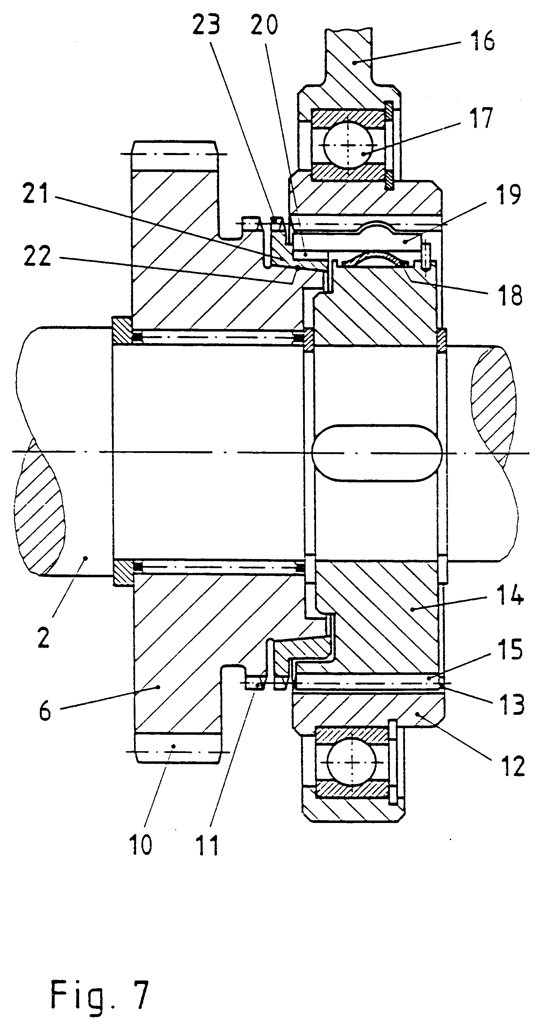

Fig. 7 stellt analog Fig. 3 eine Schalt-Zahnkupplung dar, die aber jetzt eine Synchronsperre aufweist. In mehreren gleichmäßig am Umfang der Scheibe 14 verteilten Nuten befinden sich auf Federn 18 Mitnehmerstifte 19, die in Ausnehmungen der Verzahnung 13 rasten. Diese Stifte 19 ragen in Nuten 20 des Synchronringes 21 mit konischem Reibsitz 22 und Verzahnung 23.

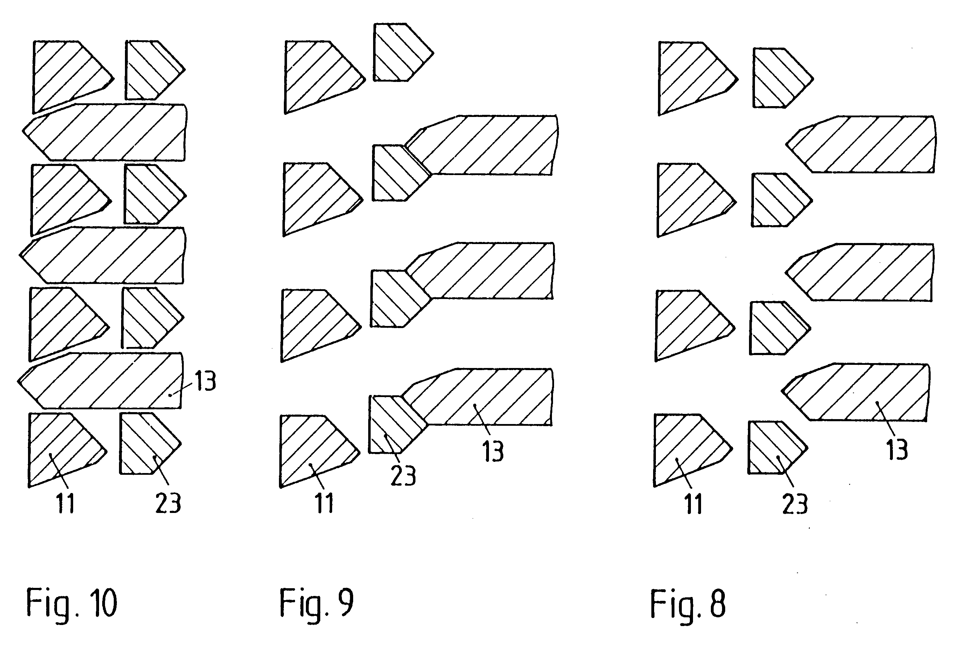

Zur Erläuterung des Schaltvorganges der Kupplung nach Fig. 7 dienen die Fig. 8, 9 und 10. Fig. 8 zeigt die Lage der Verzahnungen 11; 13; 23 bei geöffneter Kupplung. Zu Beginn des Schaltens schieben die Mitnehmerstifte 19 den Synchronring 23 auf den Konus von Rad 6. Die dadurch entstehende Reibkraft verdreht den Synchronring bis zum Anschlag der Stifte 19 an die Ränder der Nuten 20, so daß nach Fig. 9 die Verzahnungen 13 und 23 voreinander stehen und ein Durchschalten zunächst sperren. Erst wenn infolge synchroner Drehzahlen das auf den Synchronring einwirkende Reibmoment entfällt, vermag die unter der Anfangsschaltkraft stehende Verzahnung 13 den Synchronring 23 zurückzudrehen. Dadurch geschieht eine Entsperrung. Die Mitnehmerstifte 19 werden durch die axiale Bewegung des Ringes aus der Verzahnung 13 entkoppelt und wirken nicht mehr. Gemäß Fig. 10 finden die Verzahnungen 13 und 11 ineinander. Die Steuerung sieht vor, daß unmittelbar nach der Zurückdrehung des Synchronringes 23 wegabhängig die Haltekraft bereitgestellt wird. Der Synchronring 21 mit der Verzahnung 11 geht in die Ausgangsposition entsprechend Fig. 8 zurück. Die niedrige Anfangsschaltkraft verringert den Verschleiß des konischen Reibsitzes.

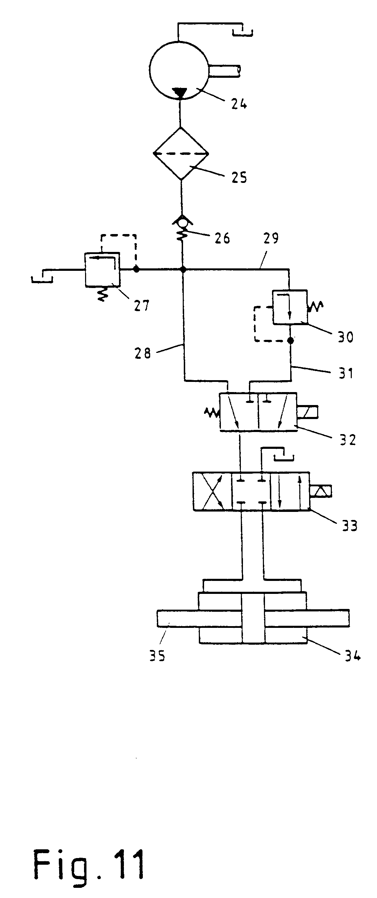

Fig. 11 gibt eine Anleitung, wie sich der erfindungsgemäße Gedanke realisieren läßt, zunächst eine verschleißmindernde geringe Schaltkraft und anschließend eine hohe Haltekraft bereitzustellen. Die Speisepumpe 24 fördert durch den Filter 25 und das Rückschlagventil 26 Öl durch das Druckbegrenzungsventil 27, das in den Leitungen 28 und 29 den Speisedruck aufbaut. Dieser wird durch das Druckminderventil 30 abgebaut, so daß in Leitung 31 ein kleiner Druck vorliegt. Die Leitungen 28 und 31 führen zu einem 3/2-Wegeventil 32, das über ein 4/3-Wegeventil 33 den Zylinder 34, dessen Kolbenstange 35 mit der Schaltgabel 16 (vergl. Fig. 3; Fig. 7) in Verbindung steht, so beaufschlagt, daß entweder der Druck aus Leitung 31 oder aber der aus Leitung 28 die Schaltkraft aufbaut. Der niedrige Druck kann auch dazu verwendet werden, um beim Trennen eines Ganges eine Schaltkraft bereitzustellen, die die Kolbenstange 35 in die neutrale Position schiebt

## Patentansprüche

1. Hydrostatisch-mechanisches Lastschaltgetriebe bestehend aus einem vierwelligen Zahnräder-Planetengetriebe (I; II) und einem dazu parallel angeordneten stufenlos einstellbaren hydrostatischen Getriebe (a;b) sowie aus weiteren Zahnrädern (3; 4; 5; 6; 5'; 6'; 7; 8; 7'; 8' ;9; 10; 11), wobei Schalt-Zahnkupplungen (Z1; Z2) mehrere Gänge realisieren, in denen jeweils das hydrostatische Getriebe (a;b) eine stufenlose Verstellung der Übersetzung des gesamten Getriebes bewirkt, wobei der Gangwechsel bei synchronen Drehzahlen, lastfrei und ohne Zugkraftunterbrechung erfolgt und wobei beim Gangwechsel die Verdrängermaschinen des hydrostatischen Getriebes (a;b) ihre Funktionen als Pumpe und Motor vertauschen und wobei die Schalt-Zahnkupplung des aktiven Ganges durch einen Hydraulikzylinder in Eingriff gehalten wird,
dadurch gekennzeichnet,
daß die Zähne der Schalt-Zahnkupplungen (Z1;Z2) auf der Vorderflanke gerade und auf der Rückflanke schräg verlaufen,
daß bei einem Gangwechsel nach Einlegen eines neuen Ganges und vor dem Auslegen des alten Ganges durch eine Verstellung des hydrostatischen Getriebes (a;b) infolge einer Verspannung die Schalt-Zahnkupplung des alten Ganges auf der Vorder- und die des neuen auf der Rückflanke trägt,
daß nach erfolgter Verspannung beim alten Gang die von außen aufgebrachte Haltekraft entfällt, und
daß durch anschließendes Verstellen des hydrostatischen Getriebes (a;b) die Verspannung aufgehoben wird, die Schalt-Zahnkupplung des neuen Ganges auf der geraden Flanke trägt und die des alten durch die Berührung mit der schrägen Flanke außer Eingriff kommt.

2. Hydrostatisch-mechanisches Lastschaltgetriebe nach Anspruch 1,
dadurch gekennzeichnet,
daß vor dem Einlegen eines neuen Ganges die von der Synchrondrehzahl abweichende Drehzahldifferenz als Regelgröße für das hydrostatische Getriebe (a;b) benutzt wird, um das Schalten bei synchronen Drehzahlen zu ermöglichen.

3. Hydrostatisch-mechanisches Lastschaltgetriebe nach den Ansprüchen 1 und 2,
dadurch gekennzeichnet,
daß Schalt-Zahnkupplungen mit einer Synchronsperre zum Einsatz kommen und daß beim Schließen zur Aktivierung der Sperre zunächst eine kleine Schaltkraft und nach Aufheben der Sperre eine große Kraft als Haltekraft aufgebracht wird.

## Claims

1. A hydromechanical power transmission comprising a four-shaft toothed-wheel epicyclic gearing system (I;II) and a continuously variable hydrostatic drive (a;b) in parallel therewith, as well as further toothed wheels (3; 4; 5; 6; 5'; 6'; 7; 8; 7'; 8'; 9; 10; 11), wherein toothed clutch couplings (Z1; Z2) provide a plurality of gears in which, in each case, the hydrostatic drive (a; b) effects continuous adjustment of the gear change transfer of the whole gearing system, wherein the gear change takes place with synchronised rotation, with no over-load and without interruption of traction power and wherein, during the gear change, the displacement mechanisms of the hydrostatic drive (a; b) exchange their functions as pump and motor and wherein the toothed clutch coupling of the operational gear is held engaged by means of an hydraulic cylinder, characterised in that the teeth of the toothed clutch couplings (Z1; Z2) run upright along the front flank and are skewed along the rear flank, in that, during any gear change, after engagement of a new gear and before disengagement of the old gear and by adjustment of the hydrostatic drive (a; b) as a result of an offset, the toothed clutch coupling of the old gear bears on the front flank and that of the new gear bears on the rear flank, in that, after completion of the offset in the old gear, the externally applied retaining force falls away, and in that, by subsequent adjustment of the hydrostatic drive (a; b), the offset is increased, the toothed clutch coupling of the new gear bears on the upright flank and that of the old gear becomes disengaged by coming into contact with the skewed flank.

2. A hydromechanical power transmission according to claim 1, characterised in that, before engagement of a new gear, the difference in rotation, which differs from the synchronised rotation count, is used as the operative value for the hydrostatic drive (a; b) in order to render possible engagement with synchronised rotation.

3. A hydromechanical power transmission according to claims 1 and 2, characterised in that toothed clutch couplings with a synchronised stop are employed and that, when closing, first of all a small amount of gearshift pressure is applied in order to activate the stop, and, after release of the stop, a large amount of pressure is applied as a retaining force.

## Revendications

**1.** Transmission hydromécanique de vitesse se composant d'un engrenage planétaire à engrenages et à quatre arbres (I, II) et d'un engrenage hydrostatique (a, b) disposé parallèlement a celui-ci et réglable en continu ainsi que d'autres engrenages (3, 4, 5, 6, 5', 6', 7, 8, 7', 8', 9, 10, 11), des embrayages à denture (Z1, Z2) réalisant plusieurs vitesses pendant lesquelles l'engrenage hydrostatique (a, b) génère à chaque fois un réglage continu de la transmission de l'ensemble de l'engrenage, le changement de vitesse s'effectuant, pour des vitesses de rotation synchrones, sans charge et sans interruption de la force de traction et les machines volumétriques de l'engrenage hydrostatique (a, b) permutant leur fonctionnement en tant que pompe et moteur lors du changement de vitesse et l'embrayage à denture de la vitesse active étant maintenu en prise par l'intermédiaire d'un vérin hydraulique, caractérisée en ce que les dents des embrayages à denture (Z1, Z2) sont droites sur le flanc de montée et obliques sur le flanc arrière, en ce que, lors d'un changement de vitesse, après en avoir passé une nouvelle et avant d'avoir enlevé l'ancienne par un réglage de l'engrenage hydrostatique (a, b), par suite d'un serrage, l'embrayage à denture de l'ancienne vitesse porte sur le flanc avant et celui de la nouvelle sur le flanc arrière, en ce qu'après le serrage concernant l'ancienne vitesse, la force de blocage appliquée de l'extérieur est supprimée et en ce qu'un réglage ultérieur de l'engrenage hydrostatique (a, b) permet de supprimer le serrage, l'embrayage à denture de la nouvelle vitesse porte sur le flanc droit et celui de l'ancienne est désengrené de par le contact avec le flanc oblique.

**2.** Transmission hydromécanique de vitesse selon la revendication 1, caractérisée en ce qu'avant de passer une nouvelle vitesse, la différence de vitesse de rotation divergeant de la vitesse de rotation synchrone est utilisée en tant que grandeur normale pour l'engrenage hydrostatique (a, b) pour permettre le changement de vitesse pour des vitesses de rotation synchrones.

**3.** Transmission hydromécanique de vitesse selon les revendications 1 et 2, caractérisée en ce que les embrayages à denture sont utilisées avec un blocage de synchronisation et en ce que, lors de la fermeture destinée à l'activation du blocage, une faible force de commande est d'abord appliquée puis, après la suppression du blocage, une force élevée, en tant que force de serrage.

**Fig. 1**

Fig. 2

Fig. 3

Fig. 5          Fig. 4

EP 0 382 132 B1

Fig. 6

Fig. 7

Fig. 8

Fig. 9

Fig. 10

Fig. 11